# EUROPÄISCHE PATENTANMELDUNG

(11) **EP 3 185 057 A1**
(43) Veröffentlichungstag der Anmeldung: **28.06.2017**
(21) Anmeldenummer: 15201925.3
(22) Anmeldetag: 22.12.2015
(51) Int. Cl.: G02B 6/26

(54) **FASEROPTISCHE STREUEINRICHTUNG UND HERSTELLUNGSVERFAHREN DAFÜR**

(71) Anmelder: Heraeus Quarzglas GmbH & Co. KG, 63450 Hanau (DE)
(72) Erfinder: SCHÖTZ, Gerhard, 63741 Aschaffenburg (DE); BAUER, Peter, 63500 Seligenstadt (DE); SCHENK, Christian, 55218 Ingelheim (DE); SCHEICH, Gerrit, 63500 Seligenstadt (DE)
(74) Vertreter: Staudt, Armin Walter

(57) **Zusammenfassung**

Bei faseroptischen Streueinrichtungen wird über eine Lichtleitfaser aus Quarzglas Licht zu einem an einem distalen Endbereich der Lichtleitfaser vorgesehenen Diffusor (6) übertragen. Der Diffusor enthält Streuzentren (8). Dabei stellt sich die grundsätzliche Anforderung, dass die gestreute Lichtverteilung den Bearbeitungs-, Behandlungs- oder Beobachtungsort mit möglichst hoher Intensität, Zielgenauigkeit und Homogenität erreichen soll. Um eine faseroptische Streueinrichtung mit einer Lichtleitfaser aus Glas bereitzustellen, die besonders hohe Anforderungen an die mechanische Belastbarkeit erfüllt, wird erfindungsgemäß vorgeschlagen, dass mindestens ein Teil der Streuzentren als geschlossene Poren in einem zu mindestens 90 Gew.-% aus SiO₂ bestehenden Sinterelement ausgebildet sind, das dem Diffusor oder einen Teil davon bildet.

## Beschreibung

### Technisches Gebiet

Die vorliegende Erfindung betrifft eine faseroptische Streueinrichtung, mit einer Lichtleitfaser aus Quarzglas zur Übertragung von Licht zu einem an einem distalen Endbereich der Lichtleitfaser vorgesehenen Diffusor, der Streuzentren enthält.

Außerdem betrifft die Erfindung ein Verfahren zum Herstellen einer faseroptischen Streueinrichtung, bei der Licht in einer Lichtleitfaser aus Quarzglas geführt und über einen lichtstreuenden Diffusor abgestrahlt wird, wobei zur Erzeugung des Diffusors auf einem distalen Endbereich der Lichtleitfaser eine Streumasse aufgebracht und diese zu dem Diffusor verfestigt wird.

Derartige faseroptische Streueinrichtungen sind mit einer oder mehreren Lichtleitfasern ausgestattet, die das von einer Lichtquelle emittierte Licht zu einem Bestrahlungs- oder Diagnoseort transportieren und dort in gewünschter Weise durch optische Streuung verteilen. Lichtleitfasern haben typischerweise einen Kern, der von einem Mantel umhüllt ist. Zum Schutz vor mechanischer Einwirkung können sie zusätzlich von einem äußeren Kunststoffmantel umhüllt sein.

### Stand der Technik

Bekannte Anwendungen umfassen die Bestrahlung von Oberflächen bei der Materialbearbeitung oder Restaurierung, die Beleuchtung von Proben in der Analytik und der Einsatz als Endoskope oder Fibroskope für in-vivo Beobachtungen und zum Durchführen medizinischer und therapeutischer Behandlungen.

Eine typische Anwendung in der Medizintechnik ist die sogenannte "photodynamischen Therapie" (PDT). Sie dient zur Bestrahlung einer Gewebeveränderung - beispielsweise einem Karzinom oder Tumor - mittels Licht geeigneter Wellenlänge. Dabei wird dem Patienten eine durch Lichtstrahlung aktivierbare Substanz (Photosensibilisator) verabreicht, die sich in der Gewebeveränderung anreichert. Die anschließende Bestrahlung löst photophysikalische Reaktionen aus, in der toxische Substanzen gebildet werden, die die Gewebeveränderung schädigen, während benachbarte Gewebebereiche weitgehend geschont werden. Die hierbei von der Faser zu übertragenden Lichtleistungen sind vergleichsweise niedrig, so dass optische Streueinrichtungen für dieses Gebiet mit Lichtleitfasern aus Kunststoff ausgestattet sein können.

Für die Behandlung oder Beleuchtung sphärischer Hohlräume, wie Blase oder chirurgisch geschaffene Hohlräume, wie sie nach Resektion der Masse eines Tumors verbleiben, sind faseroptische Streueinrichtungen mit sphärischem Streumuster vorteilhaft. Eine derartige Streueinrichtung und ein Verfahren für deren Herstellung sind in US 4,693,556 A beschrieben. Am distalen Faserende - also dem beim bestimmungsgemäßen Einsatz der Lichtquelle abgewandten Ende - wird der Faserkern freigelegt und poliert. Anschließend wird auf den Kernabschnitt und den angrenzenden Mantel solange schichtweise eine Streumasse aufgebracht, bis eine Streukugel gebildet ist. Die aus Quarzpartikeln und aus einem UV-aushärtbaren, optischen Adhäsiv bestehende Streumasse wird abschließend ausgehärtet.

Für die Behandlung oder Ausleuchtung länglicher Bereiche, wie beispielsweise der Bronchie oder der Speiseröhre, ist hingegen eine Lichtverteilung mit zylindrischer Geometrie besser geeignet. Diese wird beispielsweise mittels einer faseroptischen Streueinrichtung erzeugt, die ein zylindrisches Streumuster entlang eines Längenabschnitts des distalen Faserendes erzeugt, wie aus der US 5,074,632 A bekannt. Zur Herstellung der faseroptischen Vorrichtung wird der am distalen Ende einer optischen Faser (Lichtleitfaser) der Kern freigelegt, und anschließend werden der Kern und der daran angrenzenden Mantel mit einer streuenden Masse umhüllt. Die streuende Masse besteht aus einem UV-härtbaren Kleber, in den zwischen 5 bis 20 Gew.-% lichtstreuende Pulverteilchen eingebettet sind. Zur Minimierung von Reflexionsverlusten beim Austritt der Strahlung aus dem optischen Kern hat der Kleber einen Brechungsindex, der dem von Quarzglas entspricht (um 1,4). Die Pulverteilchen bestehen aus Al₂O₃, Diamant oder ZrO₂; sie sind für die Arbeitsstrahlung transparent und haben einen Brechungsindex, der höher ist als der von Quarzglas. Die streuende Masse wird mittels eine Pinsels aufgetragen und durch UV-Bestrahlung ausgehärtet. Zur mechanischen Stabilisierung wird die Streumasse mit einer durchsichtigen Schutzkappe ummantelt, die über ein Gewinde mit dem Kunststoff-Schutzmantel verbunden ist.

Ein weiteres typisches Anwendungsgebiet für faseroptische Streueinrichtungen ist die sogenannte "Laserablation". Dabei wird Material von einer Oberfläche durch Beschuss mit gepulster Laserstrahlung abgetragen. Die Laserstrahlung hat dabei eine hohe Leistungsdichte und bewirkt ein rasches Erhitzen und die Bildung eines Plasmas an der Bestrahlungsstelle. Die hohen Temperaturen und Energiedichten bei dieser Anwendung erfordern ein thermisch stabiles Fasermaterial, wie beispielsweise Quarzglas.

Die WO 2008/024397 A2 offenbart eine faseroptische Vorrichtung für die Laserablation mit einer Lichtleitfaser aus Quarzglas, die für hohe Lichtleistungen ausgelegt und an einem stirnseitigen Ende mit Streuzentren zum Verteilen des Lichts versehen ist. Die Streuzentren sind beispielsweise Nanohohlräume, die mit einem gepulsten Hochleistungslaser im Faserkern erzeugt werden. Bei einer anderen Ausführung wird ein Diffusor als separates Bauteil mit Kern-Mantelstruktur mittels Sol-Gel-Technik erzeugt und anschließend an das stirnseitige Ende der Lichtleitfaser angesetzt. Die Streuwirkung dieses Diffusors wird erreicht, indem in den Mantelbereich TiO₂-Streupartikel eingebaut werden. Das Diffusor-Bauteil ist stirnseitig verspiegelt und mit einer Schutzkappe versehen.

### Technische Aufgabenstellung

Bei faseroptischen Streueinrichtungen stellt sich die grundsätzliche Anforderung, dass die gestreute Lichtverteilung den Bearbeitungs-, Behandlungs- oder Beobachtungsort mit möglichst hoher Intensität, Zielgenauigkeit und Homogenität erreichen soll. Dafür sind Lichtleitfasern aus Glas besonders prädestiniert. Andererseits müssen die mechanischen und optischen Eigenschaften sowohl während des bestimmungsgemäßen Einsatzes als auch während der sonstigen Handhabung, wie etwa Sterilisationsvorgängen. zuverlässig gewährleistet sein. Es ist nicht akzeptabel, dass eine faseroptische Streueinrichtung während einer medizinischen Untersuchung oder Behandlung eines Patienten zerbricht. Insbesondere dieses Erfordernisses stellt für den Einsatz von Lichtleitfasern aus Glas in der Medizintechnik eine gewisse Hürde dar. Denn das Erzeugen oder Einbringen von Streuzentren im Bereich des Diffusors geht in aller Regel mit einer mechanischen Schwächung der ansonsten hochfesten Lichtleitfaser aus Glas einher und erhöht deren Bruchrisiko.

Der vorliegenden Erfindung liegt die Aufgabe zugrunde, eine faseroptische Streueinrichtung mit einer Lichtleitfaser aus Glas bereitzustellen, die besonders hohe Anforderungen an die mechanische Belastbarkeit erfüllt.

Weiterhin liegt der Erfindung die Aufgabe zugrunde, ein Verfahren zur kostengünstigen und zuverlässigen Herstellung einer derartigen faseroptischen Streueinrichtung anzugeben.

### Allgemeine Beschreibung der Erfindung

### Faseroptische Streueinrichtung

Hinsichtlich der faseroptischen Streueinrichtung wird diese Aufgabe ausgehend von einer Einrichtung der eingangs genannten Gattung erfindungsgemäß dadurch gelöst, dass mindestens ein Teil der Streuzentren als geschlossene Poren in einem zu mindestens 90 Gew.-% aus SiO₂ bestehenden Sinterelement ausgebildet sind.

Im Unterschied zum Stand der Technik ist der Diffusor bei der faseroptischen Streueinrichtung gemäß der Erfindung ein im Wesentlichen aus SiO₂ bestehendes Sinterelement, und die Streuzentren sind Poren im SiO₂-Sinterelement.
(a) Das Sinterelement bildet den Diffusor oder einen Teil desselben. Es ist Ergebnis eines Sinterprozesses, bei dem ein aus SiO₂-haltigen Partikeln geformter Grünkörper so erwärmt wird, dass sich die SiO₂-haltigen Partikel miteinander verbinden ohne vollständig aufzuschmelzen.
   Es enthält geschlossene Poren, die mindestens einen Teil der Streuzentren des Diffusors bilden. Die Streuwirkung des Sinterelements beruht im Wesentlichen auf den Poren, und nicht etwa auf einem Streumittel aus einem anderen Werkstoff oder auf Streuung an Partikel-Oberflächen, die in eine Kunststoff-Matrix eingebettet sind. Dadurch wird ein hoher SiO₂-Anteil des Sinterelements gewährleistet, der mindestens 90 Gew.-%, vorzugsweise mindestens 95 Gew.-% beträgt.
(b) Die Lichtleitfaser umfasst als obligatorische Lichtleitfaser-Komponente mindestens einen Kern und als fakultative Lichtleitfaser-Komponente mindestens einen den Kern umhüllenden Mantel. Der Kern und gegebenenfalls der Mantel bestehen aus dotiertem oder aus undotiertem hochkieselsäurehaltigem Glas, das hier und im Folgenden auch als Quarzglas bezeichnet wird. Der SiO₂-Anteil des Quarzglases beträgt somit mindestens 90 Gew.-%. Das Sinterelement hat mindestens eine gemeinsame Kontaktfläche mit einer oder beiden Lichtleitfaser-Komponenten. Die die Kontaktfläche bildenden Werkstoffe haben somit eine ähnliche, im Idealfall die gleiche chemische Zusammensetzung; sie bestehen jeweils aus dotiertem oder undotiertem Quarzglas, wobei sie sich in ihrem SiO₂-Gewichtsanteil um maximal 10 Prozentpunkte, vorzugsweise um maximal 5 Prozentpunkte voneinander unterscheiden. Die an die gemeinsame Kontaktfläche grenzenden Werkstoffe (Lichtleitfaser-Komponente / Sinterelement) sind in ihrer chemischen Zusammensetzung somit ähnlich, was im Folgenden auch als "arteigen" bezeichnet wird.
   Die Arteigenheit bewirkt, dass auch der thermische Ausdehnungskoeffizient und dessen Temperaturabhängigkeit beiderseits ähnlich und im Idealfall gleich sind. Dies vermindert das Auftreten mechanischer Spannungen und temperaturbedingter Verformungen beim bestimmungsgemäßen Einsatz der Streueinrichtung, was sich auch in einer hohen Temperaturwechselbeständigkeit und gegebenenfalls einer guten Haftung einer Sinterelement-Schicht auf der Lichtleitfaser-Komponente zeigt. Die faseroptische Streueinrichtung zeichnet sich daher durch hohe mechanische und optische Stabilität im Einsatz aus.
(c) Dazu trägt auch die geometrische Form der Poren bei. Die Poren entstehen beim Sintern des Grünkörpers zu dem Sinterelement oder sie bleiben nach dem Sintern als Reste vorhandener, größerer Hohlräume erhalten. Die Anzahl und Größe der Poren im Sinterelement hängt von der Sintertemperatur und -dauer ab. Durch gasbildende Komponenten im Grünkörper-Werkstoff kann der Porositätsgrad erhöht werden. Die gasbildenden Komponenten, wie etwa Kohlenstoff, Siliciumcarbid oder Siliciumnitrid, zersetzen sich beim Sintern oder sie reagieren mit Sauerstoff unter Bildung flüchtiger Substanzen und verschwinden vorzugsweise ohne nennenswerten Rückstand.
   Herstellungsbedingt - das heißt, infolge ihrer Ausformung beim Sintern des Grünkörpers - sind die Wandungen der Poren in aller Regel abgerundet. Bei mechanischer Belastung auftretende Spannungsspitzen sind daher geringer als bei gleich großen aber scharfkantigen Hohlräumen und Streupartikeln.

Das Sinterelement bildet beispielsweise eine Schicht am distalen Ende der Lichtleitfaser oder es liegt als separater, mit der Lichtleitfaser gefügter Sinterkörper vor. Es bildet eine Kontaktfläche nur mit der Stirnseite der Lichtleitfaser und/oder mit deren Zylindermantel.

Im Hinblick auf hohe mechanische Stabilität und eine hohe Effizienz der ausgekoppelten Streustrahlung ist das Sinterelement in Kontakt mit einem Faserkern, wobei sich die Zusammensetzungen von Sinterelement und Faserkern in ihrem SiO₂-Gehalt um 1 Prozentpunkt oder weniger, vorzugsweise um weniger als 0,5 Prozentpunkte, unterscheiden

Eine bevorzugte Ausführungsform der faseroptischen Streueinrichtung ist dadurch gekennzeichnet, dass das Sinterelement von einer Schutzkappe aus Quarzglas umgeben ist.

Die Schutzkappe hat eine dichte, porenfreie Oberfläche und sie besteht in der Regel ebenfalls aus Quarzglas. Sie schirmt das Sinterelement vor der Umgebung ab und sie bewahrt zum einen das Sinterelement vor Beschädigung, Korrosion oder Ablagerungen, und zum anderen vermindert die Schutzkappe die Gefahr einer vom Sinterelement ausgehenden Beschädigung oder Kontamination des Einsatzortes. Dadurch kann das Streuungsverhalten des Sinterelements optimiert werden, und die Anforderungen an die mechanische Festigkeit und an die Inertheit des Sinterelements können niedriger sein, als dies ohne die Schutzkappe der Fall wäre. Insbesondere kann die Porosität des Sinterelements hoch sein und beispielsweise mehr als 10 % betragen, so dass sich infolge der vielfachen Poren eine besonders hohe Streuwirkung einstellt.

Die Schutzkappe liegt auf dem Sinterelement unmittelbar auf; sie wird beispielsweise auf das Sinterelement aufgeschmolzen. Oder zwischen dem Sinterelement und der Schutzkappe verbleibt mindestens örtlich ein Spalt. Das aus dem Sinterelement austretende Licht erfährt im Spalt eine zusätzliche Ablenkung, was die Einleitung des Lichtes in oder auf einen Einsatzort erleichtern kann, insbesondere wenn dieser einen Brechungsindex hat, der höher ist als der Brechungsindex des Faserkerns, wie dies beispielsweise bei Salzlösungen der Fall ist.

Bei einer bevorzugten Ausführungsform der faseroptischen Streueinrichtung ist das distale Ende der Lichtleitfaser nicht zylinderförmig, sondern es zeigt eine oder mehrere seitliche Abflachungen oder es ist kegelförmig ausgebildet. Diese Gestaltung des Faserendes beeinflusst die Auskopplung des im Faserkern geführten Lichtes. Das Licht wird früher und über eine längere Strecke aus dem Faserkern ausgekoppelt, als dies ohne diese Gestaltung der Fall wäre. Durch diese Gestaltung kann die Streuintensität über eine längere Strecke größere Länge homogenisiert (Kegelform) oder auf eine oder mehrere Seiten der Lichtleitfaser konzentriert werden (seitliche Abflachung). So bewirkt beispielsweise ein seitlicher Anschliff des Faserendes von 45 Grad eine lokale seitliche Lichtauskopplung im 90 Grad-Winkel zur Faser-Längsachse.

Als besonders vorteilhaft hat es sich erwiesen, wenn das Sinterelement eine geschlossene Porosität von maximal 10 %, vorzugsweise maximal 5% aufweist.

Die Streuwirkung des Diffusors steigt mit der Porosität. Daher beträgt das Porenvolumen mindestens 2 %. Allerdings nimmt die Transmission der Arbeitsstrahlung mit der Porosität ab. Daher ist die Porosität vorzugsweise auf maximal 10 % beschränkt. Dies entspricht einer spezifischen Dichte von etwa 2 g/cm³ (bezogen auf eine theoretische Dichte von 2,2 g/cm³). Außerdem kann offene Porosität das Eindringen von Verunreinigungen in den Diffusor fördern. Daher ist der Diffusor vorteilhafterweise nicht offenporig, sondern geschlossenporig. Das heißt, er enthält Poren, aber er ist flüssigkeitsdicht. Offene Porosität eines Materials zeigt sich darin, dass es saugfähig ist, was anhand eines Farbeindringtests nachweisbar ist. Eine offene Porosität des Diffusors ist bei manchen Anwendungen nicht akzeptabel und würde dessen Umhüllung mit einer dichten Schutzkappe erfordern. Auf diese Schutzkappe kann bei der Ausführungsform des geschlossenporigen Diffusors verzichtet werden.

Die "Porosität" oder das "Porenvolumen" eines porösen Materials bezeichnet das von Hohlräumen belegte, freie Volumen innerhalb des Materials. Das Porenvolumen wird beispielsweise mittels eines Porosimeters gemessen, wobei eine nicht benetzende Flüssigkeit (wie beispielsweise Quecksilber) unter Einwirkung eines äußeren Druckes in die Poren eines porösen Materials gegen die entgegenwirkenden Oberflächenspannungskräfte gepresst wird. Die dazu benötigte Kraft ist umgekehrt proportional zur Porengröße und daher kann neben dem Porengesamtvolumen auch die Porengrößenverteilung der Probe ermittelt werden. Die Quecksilberporosimetrie erfasst nur Porengrößen oberhalb von 2 nm (Mesoporen und Makroporen).

Eine weitere bevorzugte Ausführungsform der faseroptischen Streueinrichtung zeichnet sich dadurch aus, dass das Sinterelement entlang einer vorderen Teillänge das distale Ende der Lichtleitfaser seitlich mit einer maximalen Schichtdicke von weniger als 1000 µm, vorzugsweise von weniger als 500 µm, umgibt.

Ein vorderer Längenabschnitt des Sinterelements liegt am Zylinder-Außenmantel des Faserkerns und/oder des Fasermantels an. Die Schichtdicke kann entlang dieses Längenabschnitts konstant sein. Ist sie variabel, wie beispielsweise kegelförmig oder sphärisch, insbesondere elliptisch, tropfenförmig oder kugelförmig, so entspricht die maximale Schichtdicke in diesem Längenabschnitt dem maximalen Abstand zwischen Lichtleitfaser und Oberfläche des Sinterelements in radialer Richtung gesehen. Je größer die Schichtdicke ist, umso höher ist bei gleichem Porenvolumen die lokale, seitliche Streuwirkung und umso geringer ist die lokale Transmission für die Arbeitsstrahlung. Die Streuwirkung kann bei gleicher Wandungsstärke durch Erhöhung der Porosität verstärkt werden. Im Hinblick auf einen möglichst geringen Raumbedarf des Diffusors wird eine maximale Schichtdicke von weniger als 1000 µm, besser, weniger als 500 µm bevorzugt.

Bei einer vorteilhaften Modifikation dieser faseroptischen Streueinrichtung deckt das Sinterelement eine Stirnseite des Faserkerns in einer Dicke ab, die größer ist als die maximale Schichtdicke entlang der vorderen Teillänge.

Das stirnseitig aus der Lichtleitfaser austretende Licht wird bei dieser Ausführungsform stärker gedämpft oder stärker gestreut als das seitlich entlang der vorderen Teillänge austretende Licht.

### Verfahren zur Herstellung einer faseroptischen Streueinrichtung

Hinsichtlich des Verfahrens zur Herstellung einer faseroptischen Streueinrichtung wird die oben angegebene Aufgabe ausgehend von einem Verfahren der eingangs genannten Gattung erfindungsgemäß dadurch gelöst, dass das Aufbringen der Streumasse folgende Verfahrensschritte umfasst:
(a) Bereitstellen einer Dispersion, die eine Dispersionsflüssigkeit und amorphe SiO₂-Teilchen enthält,
(b) Aufbringen der Dispersion auf eine Beschichtungsfläche im Endbereich der Lichtleitfaser unter Ausbildung einer Schlickerschicht,
(c) Trocknen der Schlickerschicht und thermisches Verdichten der getrockneten Schlickerschicht unter Ausbildung eines porenhaltigen und zu mindestens 90 Gew.-% aus SiO₂ bestehenden Sinterelements.

Das Verfahren dient dazu, am distalen Endbereich der Lichtleitfaser ein Sinterelement aufzubringen, das einen Diffusor oder einen Teil desselben bildet. Das Aufbringen erfolgt mittels eines Schlickergießverfahrens, indem eine Schlickerschicht auf dem distalen Endbereich der Lichtleitfaser erzeugt, zu einem Grünkörper getrocknet und dieser zu dem Sinterelement gesintert wird. Das Schlickergießverfahren ermöglicht eine kostengünstige Herstellung diffus streuender Sinterelemente auch mit komplexer Geometrie.

Das Sinterelement ist Ergebnis einer thermischen Verdichtung, bei der ein aus SiO₂-haltigen Partikeln geformter Grünkörper so erwärmt wird, dass sich die SiO₂-haltigen Partikel miteinander verbinden ohne vollständig aufzuschmelzen, was im Folgenden auch als "Sintern" bezeichnet wird. Sintertemperatur und -dauer sind so zu wählen, dass ein mindestens teilweise poröses Sinterelement erhalten wird, das beispielsweise eine Schicht am distalen Ende der Lichtleitfaser bildet.

Das Sinterelement enthält geschlossene Poren, die mindestens einen Teil der Streuzentren des Diffusors bilden. Es besteht aus Quarzglas und aus Poren; Partikel zur Erzeugung der Streuwirkung sind nicht erforderlich. Dadurch hat der Werkstoff des Sinterelements einen hohen SiO₂-Anteil von mindestens 90 Gew.-%, vorzugsweise mindestens 95 Gew.-%. Die Kontaktfläche zwischen dem Sinterelement und dem der Quarzglas-Lichtleitfaser wird somit von Werkstoffen gebildet, die eine ähnliche, im Idealfall die gleiche chemische Zusammensetzung haben. Sie bestehen jeweils aus dotiertem oder undotiertem Quarzglas, wobei sie sich in ihrem SiO₂-Gewichtsanteil um maximal 10 Prozentpunkte, vorzugsweise um maximal 5 Prozentpunkte voneinander unterscheiden. Diese "Arteigenheit" bewirkt, dass auch der thermische Ausdehnungskoeffizient und dessen Temperaturabhängigkeit beiderseits ähnlich und im Idealfall gleich sind. Dies vermindert das Auftreten mechanischer Spannungen und temperaturbedingter Verformungen beim bestimmungsgemäßen Einsatz der Streueinrichtung, was sich auch in einer hohen Temperaturwechselbeständigkeit und einer guten Haftung einer Sinterelement-Schicht auf der Lichtleitfaser zeigt. Die faseroptische Streueinrichtung zeichnet sich daher durch hohe mechanische und optische Stabilität im Einsatz aus.

Beim Sintern des Grünkörpers zu dem Sinterelement bilden sich geschlossene Poren, deren Anzahl und Größe von der Sintertemperatur und -dauer abhängen. Durch gasbildende Komponenten im Grünkörper-Werkstoff kann der Porositätsgrad erhöht werden. Die gasbildenden Komponenten, wie etwa Kohlenstoff oder Siliciumnitrid, zersetzen sich beim Sintern oder sie reagieren mit Sauerstoff unter Bildung flüchtiger Substanzen und verschwinden vorzugsweise ohne nennenswerten Rückstand.

Herstellungsbedingt sind die Wandungen der Poren in aller Regel abgerundet. Bei mechanischer Belastung auftretende Spannungsspitzen sind daher geringer als bei gleich großen aber scharfkantigen Hohlräumen und bei Einsatz von Streupartikeln. Auch diese Maßnahme trägt zu der hohen mechanischen Stabilität der Streueinrichtung bei.

Eine Schwierigkeit beim Schlickergießverfahren ergibt sich infolge der Schrumpfung der Schlickerschicht beim Trocknen und Sintern, die zu einer Rissbildung führen kann oder zu Ausbildung eines Spalts zwischen Diffusor und Lichtleitfaser oder sogar zum Ablösen des Diffusors. Ein weiteres Problem ergibt sich dadurch, dass das Sinterelement aus SiO₂-Teilchen erzeugt wird, das einerseits für die thermische Verfestigung einer vergleichsweise hohen Sintertemperatur bedarf, dass aber andererseits die Lichtleitfaser, auf der das Sinterelement erzeugt wird, möglichst wenig thermisch belastet werden soll.

Im Hinblick darauf wird für die Ausbildung des Sinterelements eine Dispersion bevorzugt, die amorphe, splittrige SiO₂-Teilchen enthält, die Teilchengrößen im Bereich bis maximal 500 µm, vorzugsweise maximal 100 µm, aufweisen, wobei SiO₂-Teilchen mit Teilchengrößen im Bereich zwischen 1 µm und 50 µm den größten Volumenanteil ausmachen.

SiO₂-Teilchen in diesem Größenbereich zeigen in Verbindung mit einem hohen Feststoffgehalt der Dispersion ein vorteilhaftes Sinterverhalten und eine vergleichsweise geringe Trockenschwindung, und sie erleichtern so eine rissfreie Trocknung des Grünkörpers. Dies kann auf Wechselwirkungen der SiO₂-Teilchen untereinander zurückgeführt werden. Die splittrige Morphologie der SiO₂-Teilchen wird durch Mahlen erhalten. Dabei werden gröbere Quarzglas-Körner oder Quarzglas-Bruchstücke nass oder trocken vermahlen. Im Vergleich zu einer sphärischen Morphologie zeigen splittrige SiO₂-Teilchen eine bessere Verzahnung im Grünkörper, was sowohl die Grünkörper-Festigkeit als auch die Sinteraktivität erhöht.

Dazu trägt auch eine bevorzugte Verfahrensweise bei, bei der eine Dispersionsflüssigkeit auf wässriger Basis eingesetzt wird, wobei die Dispersion einen Feststoffgehalt im Bereich zwischen 75 und 85 Gew.-% hat.

Die polare Natur der wässrigen Phase fördert die Wechselwirkung der SiO₂-Teilchen untereinander zusätzlich und erleichtert das Trocknen und Sintern des Grünkörpers. Der Feststoffgehalt (Gewichtsanteil aller SiO₂-Partikel an der Dispersion) ist mit einem Wert zwischen 75 % und 85 % relativ hoch. Der hohe Feststoffgehalt bewirkt eine hohe Viskosität des Schlickers und er trägt zu einer gleichmäßigen und geringen Schwindung der Schlickerschicht beim Trocknen und beim Verfestigen bei, so dass Spannungen im Grünkörper und im Sinterelement sowie Trocknungs- und Spannungsrisse vermieden oder verringert werden, was sich auch auf Formstabilität und Maßhaltigkeit des Verbundes von Lichtleitfaser und Diffusor günstig auswirkt. Andererseits können sich je nach dem gewählten Verfahren zum Auftragen der Dispersion auch Aspekte ergeben, die für einen dünnflüssigeren Schlicker sprechen.

Bei einer bevorzugten Verfahrensweise werden die amorphen SiO₂-Teilchen oder ein Teil derselben durch Nassmahlen von SiO₂-Ausgangskörnung hergestellt. Dabei wird die gewünschte Teilchengrößenverteilung durch den Homogenisierungsprozess des Schlickers erhalten, wobei die SiO₂-Teilchen ausgehend von vergleichsweise groben Körnern mit Durchmessern zum Beispiel im Bereich zwischen 200µm und 5000 µm beim Homogenisieren in Abhängigkeit von deren Verfestigungsgrad verkleinert werden. Beim Nassmahlen entstehen innerhalb des wässrigen Schlickers SiO₂-Teilchen jeder Größe, auch solche, die durch Wechselwirkungen untereinander bereits im Schlicker die oben beschriebenen Bindungen ausbilden, was die Stabilität der Schlicker-Schicht verbessert.

Im Hinblick auf eine möglichst geringe thermische Belastung der Lichtleitfaser beim Sintervorgang hat es sich als besonders günstig erwiesen, wenn die amorphen SiO₂-Teilchen eine mehrmodale Teilchengrößenverteilung aufweisen, mit einem ersten Maximum der Größenverteilung (D₅₀-Wert) im Bereich von 0,5 und 3 µm, vorzugsweise 1 bis 3 µm, und mit einem zweiten Maximum im Bereich von 5 bis 40 µm, vorzugsweise 5 bis 15 µm, und dass die Dispersion bevorzugt einen Gewichtsanteil an SiO₂-Nanoteilchen - bezogen auf ihren gesamten Feststoffgehalt - im Bereich von 1 bis 10 Gew-% enthält.

Die amorphen SiO₂-Teilchen weisen eine mehrmodale Teilchengrößenverteilung mit mindestens zwei, vorzugsweise drei und mehr Verteilungsmaxima. Dies erleichtert die Einstellung einer hohen Feststoffdichte des Schlickers, wodurch die Schrumpfung beim Trocknen und Sintern und damit die Gefahr einer Rissbildung weiter vermindert werden. Beispielsweise können Teilchenverteilungen mit D₅₀-Werten von 2, 5, 15, 30 und 40 µm allein oder in Kombination zum Einsatz kommen. Außerdem enthält der Schlicker vorzugsweise SiO₂-Nanoteilchen. Diese können zum Beispiel durch Pyrolyse oder Hydrolyse siliziumhaltiger Ausgangsverbindungen oder durch Polykondensation polymerisierbarer Siliziumverbindungen hergestellt werden. Nanoteilchen bestehen typischer Weise aus einem Verbund einiger Tausend SiO₂-Moleküle und haben üblicherweise eine spezifische Oberfläche nach BET im Bereich von 50 bis 400 m²/g. Durch den Zusatz der SiO₂-Nanoteilchen wird die Oberfläche des im Schlicker enthaltenen Feststoffes und die Sinteraktivität erhöht. Bei einem Anteil von weniger als 1 Gew.-% dieser Teilchen im Schlicker wirken sich die Nanoteilchen auf die Vergrößerung der Feststoffoberfläche nicht nennenswert aus, wohingegen Gehalte von mehr als 10 Gew.-% zu einer verstärkten Schrumpfung der Schlickerschicht beim Trocknen führen, die ein defektfreies Trocknen und Sintern erschweren kann.

Zum Auftragen der Schlickerschicht sind die an sich bekannten Methoden geeignet, wie beispielsweise Sprühen, elektrostatisch unterstütztes Sprühen, Fluten, Schleudern, Aufstreichen, Spachteln, Tauchen oder Pressen. Die Auftragsmethode kann die Porosität beeinflussen. Eine tendenziell hohe Dichte und eine geringe Porosität wird beispielsweise durch Tauchen erreicht; eine geringe Dichte und eine hohe Porosität durch Sprühen.

Das thermische Verdichten der getrockneten Schlickerschicht erfolgt lokalisiert am Ende der Lichtleitfaser durch Erhitzen mittels einer Brennerflamme, mittels eines Laserstrahls oder in einem Ofen. Im Hinblick auf die Aufrechterhaltung von Porosität hat sich bewährt, wenn das Sintern der getrockneten Schlickerschicht ein Erhitzen bei einer Temperatur im Bereich von 1000 bis 1300 °C umfasst. Durch Zusätze, die beim Erhitzen Gase freisetzen können, wie etwa SiC, Si₃N₄ oder Kohlenstoff, kann die Porosität des Sinterelements vergrößert, auf einen hohen Wert eingestellt und einem versehentliche Dichtsintern entgegengewirkt werden. Nach dem thermischen Verdichten kann eine mechanische Nachbearbeitung der Oberfläche erfolgen, etwa um die geometrische Gestalt des Sinterelements zu optimieren oder um die Oberfläche zu glätten oder zu strukturieren.

### Ausführungsbeispiel

Nachfolgend wird die Erfindung anhand eines Ausführungsbeispiels und einer Patentzeichnung näher erläutert. In der Zeichnung zeigt im Einzelnen in schematischer Darstellung:
- **Figur 1**: eine Ausführungsform der erfindungsgemäßen faseroptischen Streueinrichtung mit zylinderförmigem Streuelement als Diffusor in einer Seitenansicht im Schnitt,
- **Figur 2**: eine vergrößerte Detailansicht A des Sinterelements der Streueinrichtung von Figur 1, und
- **Figuren 3a - 3c**: Verfahrensschritte für die Herstellung einer weiteren Ausführungsform der erfindungsgemäßen faseroptischen Streueinrichtung mit einem sphärischen Streuelement als Diffusor in einer Seitenansicht.

### Erstes Beispiel einer faseroptischen Streueinrichtunq

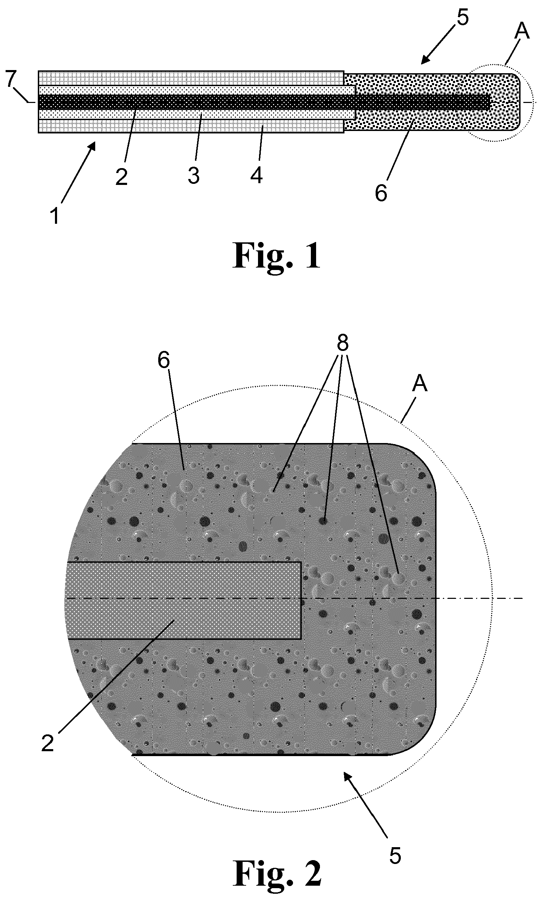

Die zylinderförmige, faseroptische Streueinrichtung von **Figur 1** umfasst eine optische Lichtleitfaser 1 mit einer Länge von etwa 2 m. Diese umfasst einen Faserkern 2, einen den Faserkern umhüllenden Mantel 3 und eine Schutzumhüllung aus einem Kunststoffmantel 4. Der Faserkern 2 hat einen Durchmesser von 200 µm und besteht aus reinem, undotiertem Quarzglas. Der optische Mantel 3 besteht aus Quarzglas, das mit etwa 4 Gew.-% Fluor dotiert ist.

Am distalen Faserende 5 ist der Kunststoffmantel 4 vollständig und der optische Mantel 3 zum größten Teil entfernt. Die Länge des blanken Kerns 2 beträgt etwa 1,5 cm. In diesem Bereich ist das Faserende 5 von einer Schicht eines zylinderförmigen Streuelements 6 überzogen, das den Zylindermantel und die Kern-Stirnseite vollständig bedeckt. Das Streuelement 6 besteht aus gesintertem, porenhaltigem undotiertem Quarzglas. Die maximale Schichtdicke des Streuelements 6 entspricht etwa der Gesamtdicke von Kunststoffmantel 4 und optischem Mantelglas 3, so dass das Streuelement 6 seitlich nicht zusätzlich aufträgt.

In das dem distalen Faserende 5 gegenüberliegende Faserende (nicht dargestellt) wird Arbeitsstrahlung mit einer Wellenlänge vom 532 nm eingekoppelt, die in der Lichtleitfaser 1 transportiert und zum distalen Ende 5 geführt wird. Dort endet die Lichtführung durch Totalreflexion, da die Brechungsindizes des Kern-Quarzglases und des Streuelement-Quarzglases für die Arbeitsstrahlung etwa gleich groß sind (sie betragen jeweils etwa 1,46). Somit gelangt Arbeitsstrahlung in das Streuelement 6, das als Diffusor dafür wirkt und sie gleichmäßig verteilt. Die Streueinrichtung zeigt im Bereich des Streuelements 6 - bezogen auf die Mittelachse 7 - eine homogene zylinderförmige Lichtabstrahlung mit einem nach außen streuenden zylindrischen Muster.

Der Überzug des Kerns 2 mit dem Streuelement 6 wird vorzugsweise anhand eines Verfahrens erzeugt, das nachfolgend anhand von Ausführungsbeispielen erläutert wird.

### Erste Technik zum Herstellen von Streuelementen

In eine Dispersionsflüssigkeit werden in einer mit Quarzglas ausgekleideten Trommelmühle amorphe Quarzglaskörnung aus natürlichem Rohstoff mit Korngrößen im Bereich zwischen 250 µm und 650 µm eingemischt. Die Quarzglaskörnung wurde vorab in einem Heißchlorierverfahren gereinigt; es wird darauf geachtet, dass der Cristobalitgehalt unter 1 Gew.-% liegt.

Diese Mischung wird mittels Mahlkugeln aus Quarzglas auf einem Rollenbock bei 23 U/min während einer Dauer von 3 Tagen soweit vermahlen, dass sich ein homogener Schlicker bildet. Im Verlauf des Vermahlens kommt es infolge des in Lösung gehenden SiO₂ zu einer Absenkung des pH-Werts auf etwa 4.

Die nach dem Vermahlen der Quarzglaskörnung erhaltenen SiO₂-Körnungsteilchen sind splittriger Natur und zeigen eine Teilchengrößenverteilung, die durch einen D₅₀- Wert von etwa 8 µm und durch einen D₉₀-Wert von etwa 40 µm gekennzeichnet ist. Dem homogenen Schlicker werden SiO₂-Nanoteilchen mit Durchmessern um 40 nm ("pyrogene Kieselsäure") hinzugefügt. Nach weiterer Homogenisierung wird ein bindemittelfreier SiO₂-Schlicker erhalten.

Mit SiO₂-Schlickern unterschiedlicher aber ähnlicher Zusammensetzung wurden mehrere Streuelemente erzeugt. Die Schlickerschichten wurden durch Eintauchen des freigelegten Kernbereichs in den Schlicker (=Tauchen) oder durch Auftragen mittels eines Pinsels (=Aufstreichen) erzeugt. Um bei der Tauchmethode die vorgegebene Dicke der Schlickerschicht zu erreichen, sind mehrere Eintauchvorgänge erforderlich, wobei die sukzessive aufgebrachte Schlickerschicht vor jedem neuen Eintauchvorgang kurz (ca. 1 Minute) abtrocknet.

Die vorgegebene Dicke der Schlickerschicht liegt im Bereich von 500 µm bis 1000 µm. Nachdem die gewünschte Dicke der Schlickerschicht erreicht ist, erfolgt das weitere Trocknen langsam, indem die Schlickerschicht an Luft acht Stunden lang ruht. Die vollständige Trocknung erfolgt unter Einsatz eines IR-Strahlers an Luft während 4 Stunden.

Die getrocknete Schlickerschicht wird anschließend in einem Sinterofen bei einer vorgegebenen Sintertemperatur im Bereich von 1200 bis 1450 °C zu einem dichten, porenhaltigen und opaken Sinterelement mit einer Dichte von mehr als 1,95 g/cm³ gesintert (bei einer theoretischen Dichte von 2,2g/cm³).

Aus der Detailansicht von **Figur 2** sind die geschlossenen Poren 8 innerhalb der Quarzglasmatrix des Streuelements 6 erkennbar. Diese bewirken über die Länge des freigelegten Kerns 2 eine homogene seitliche Ausleitung der im Kern 2 geführten Arbeitsstrahlung.

Die Zusammensetzung der jeweiligen Schlicker für die Proben 1 bis 5, die Sinterparameter und die damit erzielten Beschichtungsergebnisse sind in **Tabelle 1** angegeben:

**Tabelle 1 - Herstellung von Streuelementen**

| **Nr.** | **Flüssigkeit** | **F [Gew-%]** | **Soot [Gew-%]** | **Auftragstechnik** | **Sintern T/d** | **D [µm]** | **Porosität [%]** |
|---|---|---|---|---|---|---|---|
| **1** | DI | 74 | 5 | Tauchen | 1400 / 5 | 110 | 5 |
| **2** | DI | 77 | 9 | Tauchen | 1400 / 5 | 120 | 4 |
| **3** | DI | 76 | 4 | Tauchen | 1450 / 5 | 120 | 6 |
| **4** | DI:ET 70:30 | 78 | 7,5 | Aufstreichen | 1450 / 5 | 130 | 5 |
| **5** | DI:ET 90:10 | 78 | 2,5 | Aufstreichen | 1350 / 5 | 130 | 7 |
| **6** | ET | 87 | 3 | Pressen | 1350 / 5 | 490 | 6 |

| | | | | | | | |
|---|---|---|---|---|---|---|---|
| Dabei bedeuten DI: Deionisiertes Wasser (als Teil der Dispersionsflüssigkeit) ET: Ethanol (als Teil der Dispersionsflüssigkeit - F: Gewichtsanteil der Feststoffe am Gesamtgewicht der Dispersion Soot: Gewichtsanteil der SiO₂-Nanoteilchen am Feststoffgehalt der Dispersion T / d: Sintertemperatur (in °C) / Sinterdauer (in h) D: Maximale Schichtdicke (in µm) des Streuelements | | | | | | | |

### Zweites Beispiel einer faseroptischen Streueinrichtunq

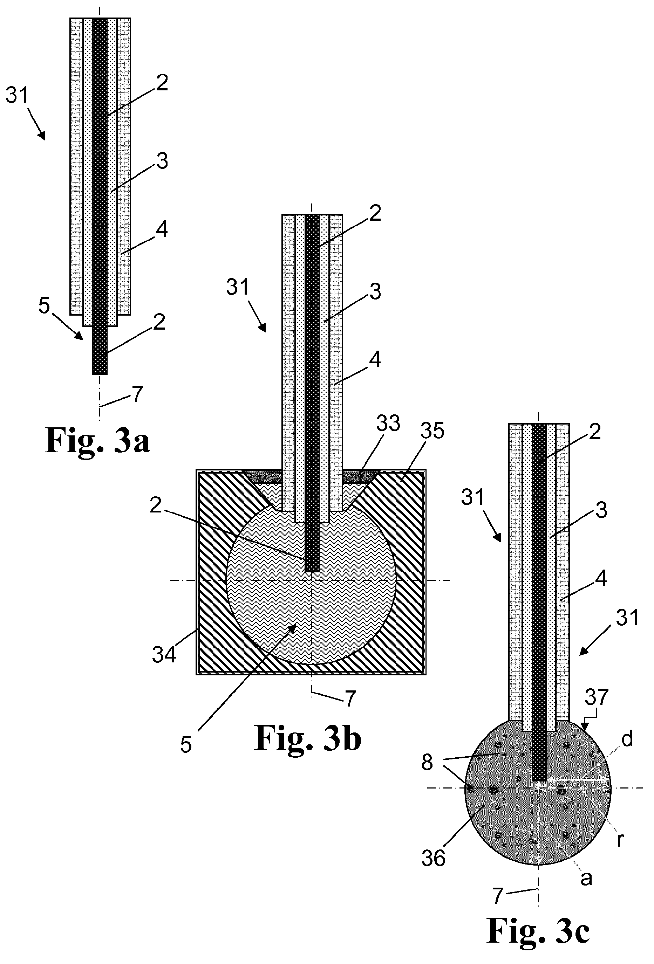

Sofern in den **Figur 3a bis 3c** die gleichen Bezugsziffern verwendet sind wie in den Figuren 1 und 2, so sind damit gleiche oder äquivalenter Bauteile und Bestandteile der faseroptischen Streueinrichtung 31 bezeichnet.

Die Figuren 3 a und 3b zeigen Verfahrensschritte für die Herstellung einer sphärischen, faseroptischen Streueinrichtung 31, wie sie in **Figur 3c** schematisch dargestellt ist. Diese umfasst eine optische Lichtleitfaser 1 mit einer Länge von etwa 2 m mit Faserkern 2, Mantel 3 und Kunststoffmantel 4. Der Faserkern 2 hat einen Durchmesser von 200 µm und besteht aus reinem, undotiertem Quarzglas. Der optische Mantel 3 besteht aus Quarzglas, das mit etwa 4 Gew.-% Fluor dotiert ist.

Am distalen Faserende 5 ist der Kunststoffmantel 4 vollständig und der optische Mantel 3 zum größten Teil entfernt. Die Länge des blanken Kerns 2 beträgt etwa 500 µm. In diesem Bereich ist der blanke Kern 2 von einem sphärischen, kugelförmigen Streuelement 36 umgeben, das einen Radius r von 600 µm aufweist. Das Streuelement 36 besteht aus gesintertem, porenhaltigem undotiertem Quarzglas. Die maximale seitliche Schichtdicke d des Streuelements 36 im Bereich des blanken Kerns 2 beträgt etwa 450 µm und ist daher sowohl kürzer als der Kugelradius r, als auch kürzer als der Abstand a zwischen der Kern-Stirnseite und der Oberfläche 37 des Streuelements 36.

In das dem distalen Faserende 5 gegenüberliegende Faserende wird Arbeitsstrahlung eingekoppelt, wie anhand Beispiel 1 beschrieben. Am Faserende 5 endet die Lichtführung durch Totalreflexion, da die Brechungsindices des Kern-Quarzglases und des Streuelement-Quarzglases für die Arbeitsstrahlung etwa gleich groß sind, so dass Arbeitsstrahlung in das Streuelement 36 gelangt, das als Diffusor wirkt und die Strahlung gleichmäßig verteilt. Die Streueinrichtung zeigt im Bereich des Streuelements 36 - bezogen auf die Mittelachse 7 - eine homogene sphärische Lichtabstrahlung.

Der Überzug des Kerns 2 mit dem Streuelement 36 wird vorzugsweise anhand des folgenden Verfahrens verwirklicht.

### Zweite Technik zum Herstellen von Streuelementen

Die stirnseitig abgemantelte Lichtleitfaser 31 wie in **Figur 3a** gezeigt, wird mit dem abgemantelten Ende nach unten so in einen kugelförmigen Hohlraum 32 einer Silikonform 35 gehalten, dass zwischen dem Boden des Hohlraums 32 und der Spitze des Kerns 2 ein Spalt von etwa 700 µm verbleibt.

Ein Schlicker 34 mit besonders hohem Feststoffgehalt (Tabelle 1, Probe 6) wird mittels eines Trichters oder mittels einer Pipette in den Hohlraum 32 eingefüllt. Um die Entstehung einer ausgeprägten Gießseele in der Hohlraummitte infolge der Trockenschrumpfung zu vermeiden, ist der Hohlraum 32 nach oben mit einem Einfülltrichter 33 verlängert, der ebenfalls mit dem Schlicker 34 gefüllt wird. Dieser Zustand ist in **Figur 3b** gezeigt.

Nach dem vollständigen Auffüllen werden im Schlicker 34 eingeschlossene Luftblasen entfernt, indem die Silikonform 35 ca. 1 h auf einer Vibrationsplatte gehalten wird. Die Vorrichtung wird in eine Vorrichtung zum unidirektionalen Pressen eingebracht und bei einem Druck von 25 MPa gepresst (typischerweise im Bereich zwischen 5 und 50 MPa).

Das weitere Trocknen erfolgt zunächst langsam durch Ruhen an Luft während einer Dauer von 24 Stunden. Danach wird das beschichtete Faserende 5 aus der Silikonform 35 entnommen und der im Gießtrichter 33 gebildete Gießkragen vorsichtig entfernt. Das vollständige Trocknen erfolgt unter Einsatz eines IR-Strahlers an Luft während 12 Stunden.

Die getrocknete Schlickerschicht wird anschließend in einem Sinterofen bei einer Sintertemperatur um 1200 °C zu einem dichten, porenhaltigen und opaken Sinterkörper mit einer Dichte von etwas mehr als 1,9 g/cm³ gesintert. Die Oberfläche des kugelförmigen Sinterkörpers wird geschliffen und poliert, so dass das Streuelement 36 erhalten wird, das den blanken Kern 2 vollständig umhüllt. Die örtliche Verteilung der Poren 8 innerhalb des Streuelements 36 ist abgesehen von den oberflächennahen Regionen homogen. Die Porosität liegt bei 6% (Tabelle 1, Probe 6).

Die Strahlungsverteilung der sphärischen faseroptischen Streueinrichtung kann beispielsweise mittels eines optischen Detektors erfasst werden, der um das Streuelement 36 rotierbar ist.

Weder bei den Proben 1 bis 5 von Tabelle 1 noch bei dem sphärischen Streuelement von Probe 6 wurden Risse, Abplatzungen oder Delaminationen zwischen Kern 2 und Streuelement beobachtet. Auch nach mehrmaligem Erhitzen der Proben auf eine Temperatur von 600 °C und anschließendem Abschrecken wurde keine mechanische Verschlechterung festgestellt. Die hohe mechanische Stabilität und thermische Belastbarkeit der faseroptischen Streueinrichtung wird darauf zurückgeführt, dass es zwischen dem Kern 2 der Lichtleitfaser 1 und dem Streuelement 6; 36 keinen nennenswerten Unterschied im thermischen Ausdehnungskoeffizienten gibt. Dies wiederum ist darauf zurückzuführen, dass das Streuelement 6; 36 jeweils eine Matrix aus Quarzglas aufweist und dass die Streuzentren als Poren der Matrix vorliegen, die sich auf den Ausdehnungskoeffizienten des Streuelements 6; 36 nicht oder nicht nennenswert auswirken.

## Patentansprüche

1. Faseroptische Streueinrichtung, mit einer Lichtleitfaser (1; 31) aus Quarzglas zur Übertragung von Licht zu einem an einem distalen Endbereich (5) der Lichtleitfaser (1; 31) vorgesehenen Diffusor, der Streuzentren enthält, **dadurch gekennzeichnet, dass** mindestens ein Teil der Streuzentren als geschlossene Poren (8) in einem zu mindestens 90 Gew.-% aus SiO₂ bestehenden Sinterelement (6; 36) ausgebildet sind.

2. Faseroptische Streueinrichtung nach Anspruch 1, **dadurch gekennzeichnet, dass** das Sinterelement (6; 36) zu mindestens 95 Gew.-% aus SiO₂ besteht.

3. Faseroptische Streueinrichtung nach Anspruch 1 oder 2, **dadurch gekennzeichnet, dass** das Sinterelement (6; 36) in Kontakt mit einem Faserkern (2) ist, und dass sich die Zusammensetzungen von Sinterelement (6; 36) und Faserkern (2) in ihrem SiO₂-Gehalt um 1 Prozentpunkt oder weniger, vorzugsweise um weniger als 0,5 Prozentpunkte, unterscheiden.

4. Faseroptische Streueinrichtung nach einem der Ansprüche 1 bis 3, **dadurch gekennzeichnet, dass** das Sinterelement (6; 36) von einer Schutzkappe aus Quarzglas umhüllt ist.

5. Faseroptische Streueinrichtung nach einem der Ansprüche 1 bis 3, **dadurch gekennzeichnet, dass** das Sinterelement (6; 36) eine geschlossene Porosität von maximal 10 %, vorzugsweise maximal 5% aufweist.

6. Faseroptische Streueinrichtung nach einem der Ansprüche 1 bis 5, **dadurch gekennzeichnet, dass** das Sinterelement (6; 36) entlang einer Teillänge das distale Ende der Lichtleitfaser mit einer maximalen Schichtdicke von weniger als1000 µm, vorzugsweise von weniger als 500 µm umgibt.

7. Faseroptische Streueinrichtung nach Anspruch 6, **dadurch gekennzeichnet, dass** das Sinterelement (6; 36) eine Stirnseite des Faserkerns in einer Dicke abdeckt, die größer ist als die maximale Schichtdicke entlang der Teillänge.

8. Verfahren zum Herstellen einer faseroptischen Streueinrichtung, bei der Licht in einer Lichtleitfaser (1; 31) aus Quarzglas geführt und über einen lichtstreuenden Diffusor abgestrahlt wird, wobei zur Erzeugung des Diffusors auf einem distalen Endbereich (5) der Lichtleitfaser (1; 31) eine Streumasse aufgebracht und diese zu dem Diffusor thermisch verfestigt wird, **dadurch gekennzeichnet, dass** das Aufbringen der Streumasse folgende Verfahrensschritte umfasst:
(a) Bereitstellen einer Dispersion (34), die eine Dispersionsflüssigkeit und amorphe SiO₂-Teilchen enthält,
(b) Aufbringen der Dispersion (34) auf eine Beschichtungsfläche im Endbereich der Lichtleitfaser (1; 31) unter Ausbildung einer Schlickerschicht,
(c) Trocknen der Schlickerschicht und thermisches Verdichten der getrockneten Schlickerschicht unter Ausbildung eines porenhaltigen und zu mindestens 90 Gew.-% aus SiO₂ bestehenden Sinterelements (6; 36).

9. Verfahren nach Anspruch 7, **dadurch gekennzeichnet, dass** ein zu mindestens 95 Gew.-% aus SiO₂ bestehendes Sinterelement (6; 36) erzeugt wird.

10. Verfahren nach einem der Ansprüche7 oder 8, **dadurch gekennzeichnet, dass** die Dispersion (34) amorphe, splittrige SiO₂-Teilchen enthält, die Teilchengrößen im Bereich bis maximal 500 µm, vorzugsweise maximal 100 µm, aufweisen, wobei SiO₂-Teilchen mit Teilchengrößen im Bereich zwischen 1 µm und 50 µm den größten Volumenanteil ausmachen.

11. Verfahren nach einem der Ansprüche 8 bis 10, **dadurch gekennzeichnet, dass** die amorphen SiO₂-Teilchen eine mehrmodale Teilchengrößenverteilung aufweisen, mit einem ersten Maximum der Größenverteilung (D₅₀-Wert) im Bereich von 0,5 und 3 µm, vorzugsweise 1 bis 3 µm, und mit einem zweiten Maximum im Bereich von 5 bis 40 µm, vorzugsweise 5 bis 15 µm, und dass die Dispersion bevorzugt einen Gewichtsanteil an SiO₂-Nanoteilchen - bezogen auf ihren gesamten Feststoffgehalt - im Bereich von 1 bis 10 Gew-% enthält.

12. Verfahren nach einem der Ansprüche 8 bis 11, **dadurch gekennzeichnet, dass** eine Dispersionsflüssigkeit auf wässriger Basis eingesetzt wird, und dass die Dispersion (34) einen Feststoffgehalt im Bereich zwischen 75 und 85 Gew.-% hat.

13. Verfahren nach einem der Ansprüche 8 bis 12, **dadurch gekennzeichnet, dass** das Aufbringen der Dispersion (34) durch Eintauchen, Aufgießen, Aufspritzen, Aufstreichen oder Pressen erfolgt.

14. Verfahren nach einem der Ansprüche 8 bis 13, **dadurch gekennzeichnet, dass** das Sintern der getrockneten Schlickerschicht ein Erhitzen bei einer Temperatur im Bereich von 1000 bis 1300 °C umfasst.

15. Verfahren nach einem der Ansprüche 8 bis 14, **dadurch gekennzeichnet, dass** ein Sinterelement (6; 36) erzeugt wird, das eine Porosität von maximal 10 %, vorzugsweise maximal 5% aufweist.
